# EUROPÄISCHE PATENTSCHRIFT

(11) **EP 2 303 976 B1**
(45) Veröffentlichungstag und Bekanntmachung des Hinweises auf die Patenterteilung: **06.09.2017**
(21) Anmeldenummer: 09797513.0
(22) Anmeldetag: 17.07.2009
(51) Int. Cl.: C09J 4/00

(54) **STABILISIERUNG VON (METH)ACRYLATBASIERENDEN ZUSAMMENSETZUNGEN DURCH SPEZIFISCHE TERTIÄRE AMINE**
STABILIZATION OF (METH)ACRYLATE-BASED COMPOSITIONS BY WAY OF SPECIFIC TERTIARY AMINES
STABILISATION DE COMPOSITIONS À BASE DE (MÉTH)ACRYLATE GRÂCE À DES AMINES TERTIAIRES SPÉCIFIQUES

(30) Priorität: 17.07.2008 CH 112008; 21.11.2008 EP 08169631
(43) Veröffentlichungstag der Anmeldung: 06.04.2011
(73) Patentinhaber: Sika Technology AG, 6340 Baar (CH)
(72) Erfinder: HAUFE, Markus, CH-8048 Zürich (CH); HUG, Max, CH-8038 Zürich (CH)
(74) Vertreter: Sika Patent Attorneys
(86) Internationale Anmeldenummer: PCT/EP2009/059201
(87) Internationale Veröffentlichungsnummer: WO 2010/007149

(56) Entgegenhaltungen:
- EP-A- 1 820 819
- JP-A- 2005 154 573
- US-A- 3 457 212

## Beschreibung

### Technisches Gebiet

Die Erfindung betrifft das Gebiet der polymerisierbaren Zusammensetzungen auf Basis von radikalisch polymerisierbaren Monomeren.

### Stand der Technik

Zusammensetzungen basierend auf radikalisch polymerisierbaren Monomeren, insbesondere (Meth)acrylatzusammensetzungen, werden seit längerem in der Klebe-, Dicht-, und Beschichtungstechnik eingesetzt.

Ebenfalls bekannt sind (Meth)acrylatzusammensetzungen umfassend Metall(meth)acrylate. Derartige Metall(meth)acrylate, davon insbesondere Zinkdi(meth)acrylat, werden vielfach eingesetzt um die Festigkeit, die Haftung und die Temperaturbeständigkeit von (Meth)acrylatzusammensetzungen zu verbessern, ohne dabei die Flexibilität und die Bruchdehnung zu beeinträchtigen.

Der Nachteil solcher Zusammensetzungen ist jedoch, dass die Lagerstabilität gegenüber Zusammensetzungen ohne Metall(meth)acrylat deutlich herabgesetzt wird. Versuche das Metall(meth)acrylat in (Meth)acrylatzusammensetzungen zu ersetzen führten zu einer Verbesserung der Lagerstabilität, jedoch gingen gleichzeitig die geforderten Eigenschaften der Zusammensetzung, insbesondere die hohe Temperaturbeständigkeit, verloren.

Wie beispielsweise beschrieben in WO 2007/096355 A1, konnten (Meth)acrylatzusammensetzungen umfassend ein Metall(meth)acrylat bereits bis zu einem gewissen Grad durch den Einsatz von Metalloxiden stabilisiert werden.

JP 2005 154573 A und US-A-3 457 212 beschreiben verschiedene Polymer-Zusammensetzungen, die als Primer oder Klebstoff angewendet werden können und die tertiäre Amine enthalten.

### Darstellung der Erfindung

Aufgabe der vorliegenden Erfindung ist es daher, Zusammensetzungen auf der Basis von radikalisch polymerisierbaren Monomeren und mindestens einem Metall(meth)acrylat zur Verfügung zu stellen, welche eine, gegenüber dem Stand der Technik, verbesserte Lagerstabilität aufweisen.

Überraschenderweise wurde nun gefunden, dass Zusammensetzungen gemäss Anspruch 1 diese Aufgabe lösen.

Durch den für den Fachmann in keiner Weise nahe liegenden Einsatz spezifischer Amine können Zusammensetzungen auf der Basis von radikalisch polymerisierbaren Monomeren, welche zur Verbesserung ihrer Eigenschaften, insbesondere der Temperaturbeständigkeit, mindestens ein Metall(meth)-acrylat enthalten, stabilisiert werden, was zu einer deutlichen Erhöhung der Lagerstabilität derartiger Zusammensetzung führt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung gemäß Ansprüche 1 bis 13 betrifft in einem ersten Aspekt eine Zusammensetzung umfassend
a) mindestens ein radikalisch polymerisierbares Monomer **R**;
b) mindestens ein Metall(meth)acrylat; sowie
c) mindestens ein tertiäres Amin **A** der Formel (I).

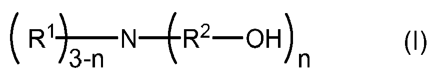

Dabei steht der Rest R¹ für einen linearen oder verzweigten Alkylrest mit 1 bis 10, insbesondere 1 bis 4, C-Atomen, bevorzugt für eine Ethyl- oder Methylgruppe.

Der Rest R² steht unabhängig voneinander für einen linearen oder verzweigten Alkylenrest mit 1 bis 10 C-Atomen, welcher gegebenenfalls ein oder mehrere Heteroatome, und welcher gegebenenfalls eine oder mehrere C-C-Mehrfachbindungen aufweist. Insbesondere steht R² für einen Alkylenrest mit 1 bis 4 C-Atomen, bevorzugt für einen Isopropylen- oder für einen Ethylenrest. Die gegebenenfalls vorhandenen Hydroxylgruppen im tertiären Amin **A** der Formel (I) befinden sich insbesondere in β-Stellung zum Stickstoffatom.

Der Index n steht für einen Wert von 0, 1, 2 oder 3. Bevorzugt steht der Index n für einen Wert von 2 oder 3.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "polymeres Polyol" umfasst im vorliegenden Dokument ein beliebiges Polymer gemäss vorhergehender Definition, welches mehr als eine Hydroxylgruppe aufweist. Dem entsprechend umfasst der Begriff "polymeres Diol" ein beliebiges Polymer, welches genau zwei Hydroxylgruppen aufweist.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Unter "Lagerstabilität" wird im vorliegenden Dokument die Eigenschaft einer Zusammensetzung bzw. einer Komponente einer Zusammensetzung verstanden, sich während des Zeitraums von ihrer Herstellung bis zu ihrer Anwendung nicht oder nur unwesentlich in ihren Anwendungseigenschaften, insbesondere in ihrer Kartuschengängigkeit, zu verändern. Getestet wird die Lagerstabilität hier durch Lagerung der Zusammensetzung bzw. der relevanten Komponente während 40 Tagen bei einer Temperatur von 50 °C. Diese Lagerung stellt eine beschleunigte Alterung dar und entspricht etwa einer Lagerung von 1,5 Jahren bei Raumtemperatur.

In diesem Dokument ist die Verwendung des Terms "unabhängig voneinander" in Zusammenhang mit Substituenten, Resten oder Gruppen dahingehend auszulegen, dass in demselben Molekül die gleich bezeichneten Substituenten, Reste oder Gruppen gleichzeitig mit unterschiedlicher Bedeutung auftreten können.

Unter "Molekulargewicht" versteht man im vorliegenden Dokument stets das Zahlenmittel des Molekulargewichts Mₙ.

Als radikalisch polymerisierbare Monomere **R** eignen sich insbesondere Vinylester, (Meth)acrylester, Acrylamide oder Styrol.

Beispielsweise sind geeignete radikalisch polymerisierbare Monomere **R** ausgewählt aus der Gruppe bestehend aus Vinylacetat, Methyl(meth)acrylat, Ethyl(meth)acrylat, n- und i-Butyl(meth)acrylat, Hexyl(meth)acrylat, 2-Ethylhexyl(meth)acrylat, Isodecyl(meth)acrylat, Cyclohexyl(meth)acrylat, 3-Tetrahydrofuryl(meth)acrylat, Isobornyl(meth)acrylat, Norbornyl(meth)acrylat, Tri-methylcyclohexyl(meth)acrylat, Benzyl(meth)acrylat, 2-Hydroxyethyl(meth)-acrylat, 2- und 3-Hydroxypropyl(meth)acrylat, Tetrahydrofurfuryl(meth)acrylat, 2-(2-Ethoxyethoxy)ethyl(meth)acrylat, Butyldiglykol(meth)acrylat, Isotridecyl-(meth)acrylat, Lauryl(meth)acrylat, Stearyl(meth)acrylat, Phenoxyethyl-(meth)acrylat, Dicyclopentadienyloxyethyl(meth)acrylat, Dihydrodicyclopentadienyl(meth)acrylat und ethoxyliertem Nonylphenol(meth)acrylat.

Vorzugsweise ist das radikalisch polymerisierbare Monomer **R** ein Methacrylat, insbesondere ausgewählt aus der Gruppe bestehend aus Methylmethacrylat (MMA), Tetrahydrofurfurylmethacrylat (THFMA), Cyclohexylmethacrylat (CHMA), Isobornylmethacrylat (IBMA) und Trimethylcyclohexylmethacrylat (TMCHMA).

Weiterhin eignen sich als radikalisch polymerisierbare Monomere **R** vernetzende Monomere wie beispielsweise Allyl(meth)acrylat oder vernetzende difunktionelle (Meth)acrylate wie beispielsweise oligomere oder polymere Verbindungen der Formel (II).

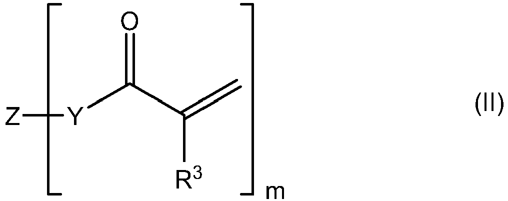

Der Rest R³ steht dabei für ein Wasserstoffatom oder für eine Methylgruppe. Der Index m steht für einen Wert von 2 bis 5. Weiterhin steht Z für ein Polyol nach Entfernung von m Hydroxylgruppen und Y steht für O oder für NR', wobei R' für einen Kohlenwasserstoffrest oder für ein Wasserstoffatom, bevorzugt für ein Wasserstoffatom, steht.

Die Verbindung der Formel (II) ist insbesondere ausgewählt aus der Gruppe bestehend aus Ethylenglykoldi(meth)acrylat, 1,3- und 1,4-Butandioldi-(meth)acrylat, 1,6-Hexandioldi(meth)acrylat, ethoxyliertem und propoxyliertem Neopentylglykoldi(meth)acrylat, propoxyliertem Glyceryltri(meth)acrylat, Trimethylolpropantri(meth)acrylat, Trimethylolpropandi(meth)acrylat, ethoxyliertem Trimethylolpropantri(meth)acrylat, modifiziertem Pentaerythritoltri(meth)acrylat, propoxyliertem ethoxyliertem Pentaerythritoltetra(meth)acrylat, Ditrimethylolpropantetra(meth)acrylat und Dipentaerythritolpenta(meth)acrylat.

Insbesondere steht m in der Verbindung der Formel (II) für einen Wert von 2 und Z steht für ein polymeres Polyol nach Entfernung von zwei OH-Gruppen. Dieses polymere Polyol ist dabei insbesondere ein Polyalkylenpolyol, ein Polyoxyalkylenpolyol oder ein Polyurethanpolyol; ein polyhydroxyfunktionelles Ethylen-Propylen-Dien-, Ethylen-Butylen-Dien- oder Ethylen-Propylen-Dien-Copolymer; ein polyhydroxyfunktionelles Copolymer aus Dienen wie 1,3-Butandien oder Diengemischen und Vinylmonomeren wie Styrol, Acrylnitril oder Isobutylen; ein polyhydroxyfunktionelles Polybutadienpolyol; ein polyhydroxyfunktionelles Acrylonitril/Butadien-Copolymer; oder ein Polysiloxanpolyol.

Beispielsweise sind derartige difunktionelle (Meth)acrylate ausgewählt aus der Gruppe bestehend aus Polyethylenglykoldi(meth)acrylat wie Diethylenglykoldi(meth)acrylat, Triethylenglykoldi(meth)acrylat, Tetraethylen-glykoldi(meth)acrylat; Polypropylenglykoldi(meth)acrylat wie Dipropylenglykol-di(meth)acrylat, Tripropylenglykoldi(meth)acrylat; und Tris-(2-hydroxyethyl)-isocyanurattri(meth)acrylat.

Weiterhin geeignet ist Z ein Diphenol, insbesondere ein alkoxyliertes Diphenol, nach Entfernung von zwei OH-Gruppen, bevorzugt ethoxyliertes Bisphenol A. Beispielsweise ist ein derartiges difunktionelles (Meth)acrylat unter dem Handelsnamen Sartomer^{®} SR 348 kommerziell erhältlich von der Firma Sartomer Company, Inc., USA.

Weiterhin geeignet sind als radikalisch polymerisierbare Monomere **R** auch difunktionelle (Meth)acrylate wie Epoxy(meth)acrylate, insbesondere Epoxy(meth)acrylate, welche aus der Umsetzung von Bisphenol-A-diglycidylether mit (Meth)acrylsäure erhältlich sind. Beispielsweise ist ein derartiges difunktionelles (Meth)acrylat unter dem Handelsnamen Sartomer^{®} CN 104 kommerziell erhältlich von der Firma Sartomer Company, Inc., USA.

Geeignete polyhydroxyterminierte Acrylnitril/Butadien-Copolymere werden typischerweise aus carboxylterminierten Acrylnitril/Butadien-Copolymeren, welche beispielsweise unter dem Namen Hypro^{®} (früher Hycar^{®}) CTBN von Emerald Performance Materials, LLC, USA, kommerziell erhältlich sind, und Epoxiden oder Aminoalkoholen hergestellt.

Derartige geeignete radikalisch polymerisierbare Monomere **R** der Formel (II) sind beispielsweise auch kommerziell erhältlich von der Firma Kraton Polymers, USA, oder unter den Handelsnamen Hypro^{®} VTB und Hypro^{®} VTBNX von der Firma Emerald Performance Materials, LLC, USA.

Beim radikalisch polymerisierbaren Monomer **R** der Formel (II) handelt es sich insbesondere um ein Polyurethan(meth)acrylat. Derartige Verbindungen sind typischerweise, in einer dem Fachmann bekannten Art und Weise, herstellbar aus der Reaktion von mindestens einem Polyisocyanat, insbesondere ein Diisocyanat, und einer (Meth)acrylsäure, einem (Meth)acrylamid oder einem (Meth)acrylsäureester, welcher eine Hydroxylgruppe aufweist. Gegebenenfalls kann das Diisocyanat vor der Umsetzung mit (Meth)acrylsäure, einem (Meth)acrylamid oder einem (Meth)acrylsäureester, welcher eine Hydroxylgruppe aufweist, mit mindestens einem Polyol **P,** insbesondere einem Diol, in einem dem Fachmann bekannten Verfahren zu einem Isocyanatgruppen aufweisenden Polyurethanpolymer umgesetzt werden.

Zur Umsetzung mit den Isocyanatgruppen des Polyisocyanats eignen sich insbesondere Hydroxyalkyl(meth)acrylat wie Hydroxypropylacrylat (HPA), Hydroxypropylmethacrylat (HPMA), Hydroxybutylacrylat (HBA) oder Hydroxybutylmethacrylat (HBMA), bevorzugt Hydroxyethylacrylat (HEA) oder Hydroxyethylmethacrylat (HEMA), oder ein Monohydroxypoly(meth)acrylat eines Polyols, bevorzugt von Glycerin oder Trimethylolpropan.

Polyurethan(meth)acrylate können ebenfalls hergestellt werden durch Veresterung eines Hydroxylgruppen aufweisenden Polyurethanpolymers mit (Meth)acrylsäure.

Weiterhin können Polyurethan(meth)acrylate hergestellt werden durch die Umsetzung eines (Meth)acrylsäureesters, welches mindestens eine Isocyanatgruppe aufweist, mit einem Hydroxylgruppen aufweisenden Polyurethanpolymer oder mit einem Polyol, wie sie beispielsweise im vorliegenden Dokument beschrieben sind. Als (Meth)acrylsäureester, welches mindestens eine Isocyanatgruppe aufweist, eignet sich beispielsweise 2-Isocyanatoethylmethacrylat.

Als Diisocyanate eignen sich grundsätzlich alle Diisocyanate. Beispielsweise sind erwähnt 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendüsocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Bevorzugte Polyole **P** sind Polyoxyalkylenpolyole, auch "Polyetherpolyole" genannt, Polyesterpolyole, Polycarbonatpolyole und deren Mischungen. Die meist bevorzugten Polyole sind Diole, insbesondere Polyoxyethylendiole, Polyoxypropylendiole oder Polyoxybutylendiole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" versteht man im vorliegenden Dokument stets das Molekulargewichtsmittel Mₙ.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, sogenannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin sind dies Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol oder durch Oxidation von Polybutadien hergestellt werden und auch hydriert sein können.

Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren (kommerziell erhältlich unter dem Namen Hypro^{®} CTBN von der Firma Emerald Performance Materials, LLC, USA) hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen aufweisenden Polyurethanpolymers mitverwendet werden.

Beispielsweise sind geeignete Polyole **P** in den Abschnitten [0029] bis [0039] von US 2006/0122352 A1 beschrieben, dessen gesamte Offenbarung hiermit durch Bezugnahme eingeschlossen wird.

Insbesondere ist das radikalisch polymerisierbare Monomere **R** der Formel (II) bei Raumtemperatur flüssig, was auch zähflüssige und hochviskose Elastomere einschliesst.

Selbstverständlich ist es möglich und kann sogar von Vorteil sein Mischungen der vorhergehend beschriebenen radikalisch polymerisierbaren Monomere **R** einzusetzen.

Der Anteil an radikalisch polymerisierbarem Monomer **R** beträgt vorzugsweise 10 bis 90 Gew.-%, insbesondere 25 bis 75 Gew.-%, bevorzugt 30 bis 65 Gew.-%, an der gesamten Zusammensetzung.

Die Zusammensetzung umfasst weiterhin mindestens ein Metall(meth)-acrylat. Metall(meth)acrylate haben die Eigenschaft, die Festigkeit, die Haftung und die Temperaturbeständigkeit von ausgehärteten Zusammensetzungen auf der Basis von radikalisch polymerisierbaren Monomeren zu steigern, ohne dabei die Flexibilität und die Bruchdehnung zu beeinträchtigen.

Als Metall(meth)acrylate eignen sich Metall(meth)acrylate von Calcium, Magnesium oder Zink. Bevorzugte Metall(meth)acrylate sind Zinkdi(meth)-acrylat, Calciumdi(meth)acrylat, Zn(OH)(meth)acrylat und Magnesiumdi(meth)acrylat, meist bevorzugt Zinkdi(meth)acrylat.

Besonders bevorzugt umfasst das Metall(meth)acrylat in der erfindungsgemässen Zusammensetzung eine Mischung von Zinkdimethacrylat und Zinkdiacrylat.

Der Anteil an Metall(meth)acrylat an der gesamten Zusammensetzung beträgt vorzugsweise 0.1 bis 20 Gew.-%, insbesondere 1 bis 15 Gew.-%, bevorzugt 8 bis 12 Gew.-%.

Weiterhin umfasst die Zusammensetzung ein tertiäres Amin **A** der Formel (I). Meist bevorzugt ist das tertiäre Amin **A** ein Trialkylamin wie Triethylamin oder ein Alkanolamin, insbesondere ein Alkyldialkanolamin wie N-Methyldiethanolamin oder ein Trialkanolamin wie Triethanolamin.

Derartige geeignete tertiäre Alkanolamine lassen sich beispielsweise herstellen durch vollständige Alkoxylierung von Ammoniak, durch zweifache Alkoxylierung von Alkylaminen oder durch einfache Alkoxylierung von N-Alkylalkanolaminen. Beispielsweise ist Triethanolamin herstellbar aus der Umsetzung von Ammoniak mit Ethylenoxid, N-Methyldiethanolamin aus der Umsetzung von Methylamin mit Ethylenoxid.

Geeignete tertiäre Alkanolamine sind neben Triethanolamin und N-Methyldiethanolamin beispielsweise auch Triisopropanolamin, N-Methyldipropanolamin, N-Methyldiisopropanolamin, N-Butyldiethanolamin und dergleichen. Meist bevorzugt befinden sich die Hydroxylgruppen im tertiären Alkanolamin in β-Stellung zum Stickstoffatom.

Der Anteil an tertiärem Amin **A** beträgt vorzugsweise 0.01 bis 7 Gew.-%, insbesondere 0.1 bis 5 Gew.-%, bevorzugt 0.4 bis 3 Gew.-%, an der gesamten Zusammensetzung.

Weiterhin umfasst die Zusammensetzung vorzugsweise mindestens einen Radikalbildner.

Der Radikalbildner ist insbesondere ein Peroxid, ein Hydroperoxid oder ein Perester. Meist bevorzugt ist der Radikalbildner Dibenzoylperoxid.

Typischerweise weist die Zusammensetzung weiterhin mindestens einen Katalysator für die Radikalbildung auf. Dieser Katalysator ist insbesondere ein tertiäres aromatisches Amin, ein Übergangsmetallsalz oder ein Übergangsmetallkomplex. Beispielsweise sind solche geeignete tertäre aromatische Amine insbesondere ausgewählt aus der Gruppe bestehend aus N,N-Dimethylanilin, N,N-Diethylanilin, N,N-Bis(hydroxyalkyl)anilin wie N,N-Bis(2-hydroxyethyl)anilin, N,N-Alkylhydroxyalkylanilin wie N-Ethyl-N-hydroxyethylanilin, N,N-Dimethyl-*p*-toluidin, N,N-Diethyl-*p*-toluidin, N-Methyl-N-hydroxyethyl-*p*-toluidin, N,N-Bis(2-hydroxyethyl)-*p*-toluidin sowie alkoxylierte N,N-Bis(hydroxyethyl)-*p*-toluidine, N-ethoxyliertes *p*-Toluidin, N,N-Bis(2-hydroxyethyl)-xylidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.

Weitere bevorzugte Katalysatoren für die Radikalbildung sind beispielsweise beschrieben in den Abschnitten [0041] - [0054] von US 2002/0007027 A1, dessen gesamte Offenbarung hiermit durch Bezugnahme eingeschlossen wird.

Der Katalysator für die Radikalbildung wird üblicherweise in einer Menge von 0.01 bis 3 Gew.-%, insbesondere von 0.1 bis 2 Gew.-%, bezogen auf die Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.

Als thermisch aktivierbare Radikalbildner eignen sich solche, welche bei Raumtemperatur noch genügend stabil sind, bei leicht erhöhter Temperatur aber bereits Radikale bilden, beispielsweise Azo-Bis-Isobutyronitril (AIBN).

Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Weiterhin kann die Zusammensetzung zusätzlich mindestens ein Metalloxid eines zwei- oder dreiwertigen Metalls umfassen.

Dieses Metalloxid besitzt die Formel MO oder M₂O₃. Das Metall M ist hierbei ausgewählt aus der Gruppe bestehend aus Zink und den Hauptgruppenmetallen. Das zwei- oder dreiwertige Metall M ist insbesondere Be(II), Mg(II), Ca(II), Sr(II), Ba(II), Al(III) oder Zn(II), vorzugsweise Mg(II), Ca(II), Sr(II), Ba(II), Al(III) oder Zn(II).

Als dreiwertiges Metall M ist insbesondere Al(III) bevorzugt. Als zweiwertiges Metall M ist insbesondere Mg(II), Ca(II) oder Zn(II) bevorzugt. Zweiwertige Metalle sind gegenüber dreiwertigen Metallen bevorzugt. Die besonders bevorzugten Metalloxide sind MgO, CaO oder ZnO. Das meist bevorzugte Metalloxid ist Magnesium(II)oxid, MgO.

Diese Metalloxide können natürlicher Art oder synthetisch hergestellt sein. Bevorzugt werden sie als Pulver eingesetzt. Bevorzugt weisen sie eine hohe spezifische Oberfläche auf.

Der Anteil an Metalloxiden beträgt vorzugsweise 0.01 bis 10 Gew.-%, insbesondere 0.1 bis 5 Gew.-%, bevorzugt 0.5 bis 3 Gew.-%, an der gesamten Zusammensetzung.

Die Zusammensetzung kann weiterhin zusätzlich mindestens einen Haftverbesserer, insbesondere ein (Meth)acrylat der Formel (III), enthalten.

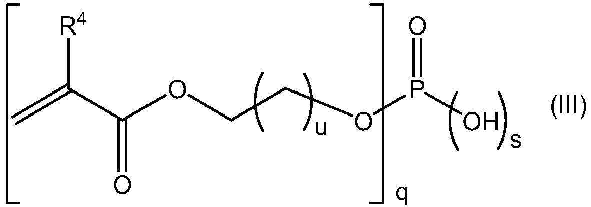

Dabei steht der Rest R⁴ entweder für ein Wasserstoffatom oder für eine Methylgruppe. Der Index u steht für einen Wert von 1 bis 15, insbesondere von 1 bis 5, bevorzugt von 1 bis 3. Der Index q steht für einen Wert von 1 bis 3 und der Index s für einen Wert von 3 minus q.

Bevorzugte (Meth)acrylate der Formel (III) sind 2-Methacryloyloxyethylphosphat, Bis(2-Methacryloyloxyethyl)phosphat sowie Tris(2-Methacryloyloxyethyl)phosphat und Mischungen davon.

Weitere geeignete Haftverbesserer sind Silane, insbesondere organofunktionelle Silane. Besonders geeignet sind dabei (Meth)acryloxyalkyltrialkoxysilane wie 3-Methacryloxypropyltrimethoxysilan, Glycidyloxyalkyltrialkoxysilane wie 3-Glycidyloxypropyltrimethoxysilan, und dergleichen. Beispielsweise sind derartige geeignete Silane unter dem Handelsnamen Dynasylan^{®} MEMO von der Firma Evonik Degussa GmbH, Deutschland, oder unter dem Handelsnahmen Silquest^{®} A-187, Momentive Performance Materials Inc., USA, kommerziell erhältlich.

Der Anteil des gegebenenfalls vorhandenen Haftverbesserers an der gesamten Zusammensetzung beträgt vorzugsweise 0.01 bis 12 Gew.-%, insbesondere 0.5 bis 8 Gew.-%.

Weiterhin kann die Zusammensetzung zusätzlich mindestens ein Core-Shell Polymer enthalten. Core-Shell Polymere bestehen aus einem elastischen Kernpolymer (Core) und einem starren Schalen-Polymer (Shell). Besonders geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.

Besonders geeignete Core-Shell Polymere sind diejenigen, welche im radikalisch polymerisierbaren Monomer **R** aufquellen, sich aber darin nicht lösen.

Bevorzugte Core-Shell Polymere sind so genannte MBS Polymere, welche beispielsweise kommerziell unter dem Handelsnamen Clearstrength^{®} von Arkema Inc., USA, oder Paraloid^{®} von Rohm and Haas, USA, erhältlich sind. Die Core-Shell Polymere werden bevorzugt in einer Menge von 0.01 bis 30 Gew.-%, insbesondere von 10 bis 25 Gew.-%, bezogen auf die gesamte Zusammensetzung, eingesetzt.

Die Zusammensetzung kann weiterhin zusätzliche feste oder flüssige Zähigkeitsverbesserer enthalten. Unter einem "Zähigkeitsverbesserer" wird hierbei und im Folgenden ein Zusatz zu einer Polymermatrix verstanden, der bereits bei geringen Zuschlägen von 0.1 bis 15 Gew.-%, insbesondere von 0.5 bis 8 Gew.-%, bezogen auf das Gesamtgewicht der Zusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Neben den vorhergehend beschriebenen Core-Shell-Polymeren eignen sich als feste Zähigkeitsverbesserer beispielsweise organische ionengetauschte Schichtminerale, wie sie dem Fachmann unter den Begriffen Organoclay oder Nanoclay bekannt sind; Polymere oder Blockcopolymere, insbesondere der Monomere Styrol, Butadien, Isopren, Chloropren, Acrylnitril und Methylmethacrylat, sowie chlorsulfoniertes Polyethylen; und amorphes Siliciumdioxid.

Als flüssige Zähigkeitsverbesserer eignen sich insbesondere Flüssigkautschuke, wie sie unter den Handelsnahmen Hypro^{®} CTBN, ETBN oder VTBN kommerziell erhältlich sind von der Firma Emerald Performance Materials, LLC, USA, sowie epoxidharzmodifizierte Flüssigkautschuke des Typs Hypro^{®} CTBN.

Weiterhin kann die Zusammensetzung zusätzlich mindestens einen Füllstoff enthalten. Insbesondere geeignet sind dabei natürliche, gemahlene oder gefällte Calciumcarbonate (Kreiden), welche gegebenenfalls mit Fettsäuren, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.

Der Füllstoff wird üblicherweise in einer Menge von 0.01 bis 30 Gew.-%, insbesondere von 1 bis 20 Gew.-%, bevorzugt 1 bis 10 Gew.-%, bezogen auf die gesamte Zusammensetzung, eingesetzt.

Die Zusammensetzung kann weiterhin zusätzlich mindestens ein Epoxidharz enthalten, welches durchschnittlich mehr als eine Epoxidgruppe pro Molekül aufweist. Vorzugsweise handelt sich dabei um Diglycidylether von Bisphenol A, von Bisphenol F sowie von Bisphenol A/F. Die Bezeichnung "A/F" verweist hierbei auf eine Mischung von Aceton mit Formaldehyd, welche als Edukt bei dessen Herstellung verwendet wird. Bevorzugt stellt das Epoxidharz ein Epoxid-Flüssigharz dar. Weiterhin geeignet stellt das Epoxidharz das Epoxidharz eine Mischung von Epoxid-Flüssigharz mit Epoxid-Festharz dar.

Geeignete Epoxid-Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA, kommerziell erhältlich.

Die Zusammensetzung kann gegebenenfalls zusätzlich noch weitere Bestandteile enthalten. Derartige zusätzliche Bestandteile sind insbesondere, Farbstoffe, Pigmente, Inhibitoren, UV- und Hitzestabilisatoren, Antistatika, Flammschutzmittel, Biozide, Weichmacher, Wachse, Verlaufsmittel, Haftvermittler, Thixotropierungsmittel, Abstandhalter und weitere dem Fachmann bekannte gängige Rohstoffe und Additive.

Vorzugsweise handelt es sich bei der Zusammensetzung um eine zweikomponentige Zusammensetzung, wobei zwei Komponenten **K1** und **K2,** bis zur Applikation getrennt voneinander aufbewahrt werden. Typischerweise beinhaltet eine erste Komponente **K1** insbesondere jene Inhaltsstoffe der beschriebenen Zusammensetzung, welche radikalisch polymerisierbare Gruppen aufweisen. Eine zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.

Typischerweise weisen in beschriebenen zweikomponentigen Zusammensetzungen die Komponente **K1** das radikalisch polymerisierbare Monomer **R,** das Metall(meth)acrylat, das Amin **A,** Core-Shell Polymere, Katalysatoren für die Radikalbildung, Schlagzähigkeitsmodifikatoren, Metalloxide, Haftverbesserer, Pigmente und Füllstoffe und die Komponente **K2** den Radikalstarter, Pigmente, Füllstoffe sowie das gegebenenfalls vorhandene Epoxidharz auf. Bevorzugt weist die Komponente **K1** keine basischen, anorganischen Bestandteile, insbesondere keine basischen Füllstoffe, bevorzugt keine Füllstoffe, auf.

Das Volumenverhältnis beim Mischen von **K1** zu **K2** liegt insbesondere im Bereich von 1:1 bis 10:1.

In gewissen Fällen kann es vorteilhaft sein, die beiden Komponenten **K1** und **K2** unterschiedlich einzufärben. Dadurch lässt sich bei der Mischung der Komponenten die Mischgüte überprüfen und Mischfehler lassen sich frühzeitig erkennen. Ebenfalls lässt sich durch diese Massnahme qualitativ überprüfen, ob das vorgesehene Mischverhältnis eingehalten wurde.

Eine derartige zweikomponentige Zusammensetzung wird typischerweise in einer Verpackung aufbewahrt, welche zwei von einander getrennte Kammern aufweist. Die Komponente **K1** ist hierbei in der einen Kammer und die Komponente **K2** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **K1** und **K2** mit Hilfe eines Statikmischers, welcher auf die Verpackung mit zwei Kammern aufgesetzt werden kann.

Solche geeigneten Verpackungen sind beispielsweise beschrieben in US 2006/0155045 A1, WO 2007/096355 A1 und in US 2003/0051610 A1, deren gesamte Offenbarung hiermit durch Bezugnahme eingeschlossen wird.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Die Aushärtung der erfindungsgemässen Zusammensetzung erfolgt durch eine radikalische Polymerisationsreaktion der radikalisch polymerisierbaren Monomere **R** und gegebenenfalls weiterer radikalisch polymerisierbarer Bestandteile in der Zusammensetzung. Der Ablauf, insbesondere die Geschwindigkeit, der zur Aushärtung der Zusammensetzung führenden Reaktion, kann durch die Wahl der eingesetzten Bestandteile eingestellt werden. Typischerweise verläuft die Aushärtung der Zusammensetzung in der Art, dass die Zusammensetzung bereits in einem frühen Stadium eine hohe Anfangsfestigkeit erhält.

Weiterhin betrifft die Erfindung die gemäß Anspruch 14 einer Zusammensetzung, wie sie vorhergehend beschrieben ist, als Klebstoff, Dichtstoff oder als Beschichtung. Insbesondere eignet sich die erfindungsgemässe Zusammensetzung für Verklebungen, Abdichtungen oder Beschichtungen, welche erhöhte Anforderungen bezüglich der Temperaturbeständigkeit und der Lagerstabilität erfüllen müssen und gleichzeitig eine gute Flexibilität aufweisen müssen.

Das Substrat, auf dessen Oberfläche die Zusammensetzung appliziert wird, kann im Vorfeld mit geeigneten Vorbehandlungsmitteln oder Reinigern behandelt worden sein. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösungsmitteln oder eine Beflammung oder eine Plasmabehandlung, insbesondere eine Luftplasmabehandlung bei Atmosphärendruck.

Besonders geeignet ist die Vorbehandlung bzw. die Reinigung der Substrate mit Sika^{®} Cleaner P oder Sika^{®} ADPrep, welche kommerziell erhältlich sind bei der Sika Schweiz AG.

Die erfindungsgemässe Zusammensetzung wird insbesondere verwendet in einem Verfahren des Verklebens zweier Substrate S1 und S2 umfassend die Schritte
i) Applizieren einer Zusammensetzung gemäss vorhergehender Beschreibung auf ein Substrat **S1**;
ii) Kontaktieren der applizierten Zusammensetzung mit einem zweiten Substrat **S2** innerhalb der Offenzeit;
oder
i') Applizieren einer Zusammensetzung gemäss vorhergehender Beschreibung auf ein Substrat **S1**;
ii') Applizieren einer Zusammensetzung gemäss vorhergehender Beschreibung auf ein Substrat **S2**;
iii') Fügen der beiden mit Zusammensetzung applizierten Substrate **S1** und **S2** innerhalb der Offenzeit.

Dabei besteht das zweite Substrat **S2** aus dem gleichen oder einem unterschiedlichen Material wie das Substrat **S1.** Im Fall einer zweikomponentigen Zusammensetzung erfolgt vor dem Schritt i), bzw. i') und ii'), das zumindest partielle Mischen der zwei Komponenten.

Ebenfalls möglich ist ein Verfahren der Verklebung zweier Substrate **S1** und **S2** umfassend die Schritte
i") Applizieren einer Komponente **K1** gemäss vorhergehender Beschreibung auf ein Substrat **S1**;
ii") Applizieren einer Komponente **K2** gemäss vorhergehender Beschreibung auf ein Substrat **S2**;
iii") Fügen der beiden mit je einer Komponente **K1** oder **K2** beschichteten Substrate **S1** und **S2.**

Bei einem derartigen Verfahren mischen sich die beiden Komponenten **K1** und **K2** beim Fügen der Substrate. Dieses Verfahren eignet sich insbesondere bei Verklebungen über sehr dünne Klebstoffschichten.

Insbesondere wird die erfindungsgemässe Zusammensetzung auch verwendet in einem Verfahren des Abdichtens oder des Beschichtens eines Substrates **S1** umfassend die Schritte
i"') Applizieren einer Zusammensetzung gemäss vorhergehender Beschreibung auf ein Substrat **S1**;
ii'") Aushärtung der Zusammensetzung.

Im Fall einer zweikomponentigen Zusammensetzung erfolgt vor dem Schritt i'"), das zumindest partielle Mischen der zwei Komponenten.

Weiterhin umfasst die vorliegende Erfindung eine ausgehärtete Zusammensetzung, welche aus einer vorhergehend beschriebenen Zusammensetzung durch einen Härtungsprozess erhältlich ist. Insbesondere handelt es sich bei der Zusammensetzung um eine zweikomponentige Zusammensetzung, so dass die ausgehärtete Zusammensetzung durch ein zumindest partielles Mischen der beiden Komponenten **K1** und **K2** erhältlich ist.

Ebenfalls umfasst die Erfindung Artikel, welche nach einem vorhergehend beschriebenen Verfahren verklebt, abgedichtet oder beschichtet wurden. Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, ein Sanitärobjekt, ein Werkzeug oder ein Transportmittel, insbesondere ein Fahrzeug zu Wasser oder zu Land, bevorzugt ein Automobil, ein Bus, ein Lastkraftwagen, ein Zug oder ein Schiff. Bevorzugt sind solche Artikel auch Anbauteile von industriellen Gütern oder Transportmittel, insbesondere auch Modulteile, welche an der Fertigungslinie als Module verwendet werden und insbesondere an- oder eingeklebt werden. Insbesondere werden diese vorgefertigten Anbauteile im Transportmittelbau eingesetzt. Beispielsweise sind derartige Anbauteile Führerkabinen von Lastkraftwagen oder von Lokomotiven oder Schiebedächer von Automobilen. Bevorzugt handelt es sich bei diesen Artikeln um Sanitärobjekte.

In einem weiteren Aspekt umfasst die Erfindung die Verwendung gemäß Anspruch 15 eines tertiären Amins **A** der Formel (I), wie es vorhergehend beschrieben ist, zur Erhöhung der Lagerstabilität von Zusammensetzungen umfassend mindestens ein radikalisch polymerisierbares Monomer **R** sowie ein Metall(meth)acrylat, insbesondere Zinkdi(meth)acrylat. Weiterhin eignet sich die Verwendung eines tertiären Amins **A** der Formel (I) in einer Zusammensetzung, welche zusätzlich ein Metalloxid eines zwei- oder dreiwertigen Metalls, insbesondere MgO, CaO oder ZnO, bevorzugt MgO umfasst.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Zusammensetzungen

Es wurden die folgenden Zusammensetzungen hergestellt:

Als Komponente **K1** wurden die in der Tabelle 1 aufgeführten Bestandteile in den angegebenen Gewichtsanteilen in einem Dissolver bei einer Temperatur von maximal 80 °C miteinander vermischt und eingerührt, bis eine makroskopisch homogene Paste erhalten wurde.

Als Komponente **K2** wurden die in der Tabelle 1 aufgeführten Bestandteile in den angegebenen Gewichtsanteilen in einem Dissolver miteinander vermischt.

Die hergestellten Komponenten **K1** und **K2** wurden in die getrennten Kammern von Doppelkartuschen eingefüllt und bei der Applikation in einem Volumenverhältnis von 10:1 mittels Statikmischer vermischt.

### Beschreibung der Prüfmethoden

Die Bestimmung der **Lagerstabilität** erfolgte über die Messung der Auspressmenge der hergestellten Komponente **K1** der Zusammensetzung. Dafür wurde die Komponente **K1** in eine Kartusche gefüllt, während der in Tabelle 1 angegebenen Zeit und Temperatur gelagert und schliesslich nach Konditionierung während 12 Stunden bei 23 °C geöffnet. Eine Statikmischer Sulzer Quardo^{®}, kommerziell erhältlich von Sulzer Chemtech Ltd., Schweiz, mit einem Innendurchmesser von 7.5 mm wurde aufgeschraubt, anschliessend wurde die Komponente **K1** mit Hilfe eines pneumatischen Auspressgeräts mit einem Druck von 4 bar während einer Zeit von 15 Sekunden ausgepresst und die Auspressmenge wurde gewogen.

Die **Zugscherfestigkeit** wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 12x25 mm; Schichtdicke: 1.5 mm; Messgeschwindigkeit: 10 mm/min; Substrate: Aluminium Prüfkörper (100x25x2 mm) von Rocholl, Deutschland (AIMg₃-Legierung); Temperatur: 23°C (falls nicht anders genannt)). Die Prüfung der Zugscherfestigkeit erfolgte nach den in Tabelle 1 angegebenen Lagerungen der verklebten Substrate.

**Tabelle 1 Zusammensetzungen 1 bis 4 und die Referenzbeispiele Ref1 und Ref2 in Gewichtsanteilen sowie die Resultate;**

| | | | ***1*** | ***2*** | ***3*** | ***4*** | ***Ref1*** | ***Ref2*** |
|---|---|---|---|---|---|---|---|---|
| **K1** | Cyclohexylmethacrylat | | 54 | 54 | | | 55 | |
| | Tetrahydrofurfurylmethacrylat | | | | 54 | 54 | | 55 |
| | Hypro^{®} VTBNX | | 18 | 18 | 18 | 18 | 19 | 19 |
| | Zinkdimethacrylat | | 10 | 10 | 10 | 10 | 10 | 10 |
| | N-Methyldiethanolamin | | 2 | | 2 | | | |
| | N-Ethyldiisopropylamin | | | 2 | | 2 | | |
| | Core-Shell Polymer | | 15 | 15 | 15 | 15 | 15 | 15 |
| | Katalysator^{a} | | 1 | 1 | 1 | 1 | | 1 |
| | | | | | | | | |
| **K2** | Kreide | | 50 | 50 | 50 | 50 | 50 | 50 |
| | Dibenzoylperoxid^{b} | | 50 | 50 | 50 | 50 | 50 | 50 |
| | | | | | | | | |
| Auspressmenge [g] | | 1d/23 °C | 65 | 150 | 405 | 440 | 41 | 276 |
| | | 7d/50 °C | 48 | 86 | 450 | 360 | 8 | 1 |
| | | 12d/50 °C | 51 | 85 | 460 | 440 | 0 ^{c} | 0 ^{c} |
| | | 34d/50 °C | 32 | 59 | - | - | - | - |
| | | 43d/50 °C | - | - | 450 | 360 | - | - |
| Zugscherfestigkeit [MPa] | | 1d/23 °C | 11.2 | 9.8 | 11.2 | 9.5 | 10.7 | 10.4 |
| | | 30d/50 °C | 9.5 | 8.0 | 9.6 | 2.7 | 0 ^{d} | 0 ^{d} |

| | | | | | | | | |
|---|---|---|---|---|---|---|---|---|
| ^{a} Katalysator für Radikalbildung (tertiäres Amin auf Toluidinbasis); ^{b} 40 Gew.-% in Weichmacher; ^{c} vollständige Aushärtung nach 12 Tagen bei 50 °C; ^{d} nicht stabil. | | | | | | | | |

## Patentansprüche

1. Zusammensetzung umfassend
a) mindestens ein radikalisch polymerisierbares Monomer **R**;
b) mindestens ein Metall(meth)acrylat; sowie
c) mindestens ein tertiäres Amin **A** der Formel (I) 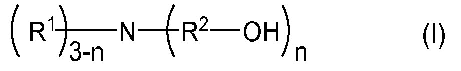
wobei der Rest R¹ für einen linearen oder verzweigten Alkylrest mit 1 bis 10 C-Atomen steht;
der Rest R²unabhängig voneinander für einen linearen oder verzweigten Alkylenrest mit 1 bis 10 C-Atomen steht, welcher gegebenenfalls ein oder mehrere Heteroatome, und welcher gegebenenfalls eine oder mehrere C-C-Mehrfachbindungen aufweist; und
der Index n für einen Wert von 0, 1, 2 oder 3 steht.

2. Zusammensetzung gemäss Anspruch 1, **dadurch gekennzeichnet, dass** der Rest R¹ für einen linearen oder verzweigten Alkylrest mit 1 bis 4 C-Atomen steht.

3. Zusammensetzung gemäss einem der vorhergehenden Ansprüche, **dadurch gekennzeichnet, dass** der Rest R² für einen linearen oder verzweigten Alkylenrest mit 1 bis 4 C-Atomen steht.

4. Zusammensetzung gemäss einem der vorhergehenden Ansprüche, **dadurch gekennzeichnet, dass** der Index n für einen Wert von 2 oder 3 steht.

5. Zusammensetzung gemäss einem der vorhergehenden Ansprüche, **dadurch gekennzeichnet, dass** das Metall(meth)acrylat Zinkdi(meth)acrylat ist.

6. Zusammensetzung gemäss einem der vorhergehenden Ansprüche, **dadurch gekennzeichnet, dass** das Metall(meth)acrylat eine Mischung aus Zinkdimethacrylat und Zinkdiacrylat umfasst.

7. Zusammensetzung gemäss einem der vorhergehenden Ansprüche, **dadurch gekennzeichnet, dass** die Zusammensetzung zusätzlich mindestens einen Radikalbildner enthält.

8. Zusammensetzung gemäss einem der vorhergehenden Ansprüche, **dadurch gekennzeichnet, dass** die Zusammensetzung zusätzlich mindestens ein Metalloxid eines zwei- oder dreiwertigen Metalls umfasst.

9. Zusammensetzung gemäss einem der vorhergehenden Ansprüche, **dadurch gekennzeichnet, dass** das radikalisch polymerisierbare Monomer **R** ein Methacrylat ist.

10. Zusammensetzung gemäss einem der vorhergehenden Ansprüche, **dadurch gekennzeichnet, dass** der Anteil an Metall(meth)acrylat 0.1 bis 20 Gew.-% an der gesamten Zusammensetzung beträgt.

11. Zusammensetzung gemäss einem der vorhergehenden Ansprüche, **dadurch gekennzeichnet, dass** der Anteil an tertiärem Amin **A** der Formel (I) 0.01 bis 7 Gew.-% an der gesamten Zusammensetzung beträgt.

12. Zusammensetzung gemäss einem der vorhergehenden Ansprüche, **dadurch gekennzeichnet, dass** die Zusammensetzung zusätzlich mindestens ein tertiäres aromatisches Amin oder ein Übergangsmetallsalz oder ein Übergangsmetallkomplex als Katalysator für die Radikalbildung enthält.

13. Zusammensetzung gemäss Anspruch 7, **dadurch gekennzeichnet, dass** die Zusammensetzung zweikomponentig ist, wobei
die erste Komponente **K1** das radikalisch polymerisierbare Monomer **R** umfasst; und
die zweite Komponente **K2** den Radikalbildner umfasst.

14. Verwendung einer Zusammensetzung gemäss einem der Ansprüche 1 bis 13 als Klebstoff, Dichtstoff oder als Beschichtung.

15. Verwendung eines tertiären Amins **A** der Formel (I), wie es in einer Zusammensetzung gemäss Anspruch 1 beschrieben worden ist, zur Erhöhung der Lagerstabilität von Zusammensetzungen umfassend mindestens ein radikalisch polymerisierbares Monomer **R** sowie ein Metall(meth)acrylat, insbesondere Zinkdi(meth)acrylat.

## Claims

1. Composition comprising
a) at least one radically polymerizable monomer **R;**
b) at least one metal (meth)acrylate; and
c) at least one tertiary amine **A** of the formula (I) 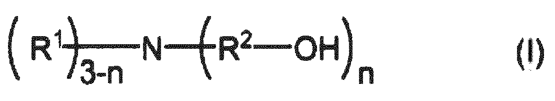
where the radical R¹ is a linear or branched alkyl radical having 1 to 10 carbon atoms;
the radical R² independently at each occurrence is a linear or branched alkylene radical having 1 to 10 carbon atoms, and optionally has one or more heteroatoms, and optionally has one or more C-C multiple bonds;
and
the index n has a value of 0, 1, 2 or 3.

2. Composition according to Claim 1, **characterized in that** the radical R¹ is a linear or branched alkyl radical having 1 to 4 carbon atoms.

3. Composition according to either of the preceding claims, **characterized in that** the radical R² is a linear or branched alkylene radical having 1 to 4 carbon atoms.

4. Composition according to any of the preceding claims, **characterized in that** the index n has a value of 2 or 3.

5. Composition according to any of the preceding claims, **characterized in that** the metal (meth)-acrylate is zinc di(meth)acrylate.

6. Composition according to any of the preceding claims, **characterized in that** the metal (meth)-acrylate is a mixture of zinc dimethacrylate and zinc diacrylate.

7. Composition according to any of the preceding claims, **characterized in that** the composition further comprises at least one radical initiator.

8. Composition according to any of the preceding claims, **characterized in that** the composition further comprises at least one metal oxide of a divalent or trivalent metal.

9. Composition according to any of the preceding claims, **characterized in that** the radically polymerizable monomer **R** is a methacrylate.

10. Composition according to any of the preceding claims, **characterized in that** the fraction of metal (meth)acrylate is 0.1 to 20 wt% based on the overall composition.

11. Composition according to any of the preceding claims, **characterized in that** the fraction of tertiary amine **A** of the formula (I) is 0.01 to 7 wt% based on the overall composition.

12. Composition according to any of the preceding claims, **characterized in that** the composition further comprises at least one tertiary aromatic amine or transition metal salt or transition metal complex as catalyst for radical formation.

13. Composition according to Claim 7, **characterized in that** the composition is two-component, where the first component **K1** comprises the radically polymerizable monomer **R;** and
the second component **K2** comprises the radical initiator.

14. Use of a composition according to any of Claims 1 to 13 as adhesive, sealant or coating.

15. Use of a tertiary amine **A** of the formula (I) as described in a composition according to Claim 1 for increasing the storage stability of compositions comprising at least one radically polymerizable monomer **R** and a metal (meth)acrylate, more particularly zinc di(meth)acrylate.

## Revendications

1. Composition, comprenant :
a) au moins un monomère polymérisable par voie radicalaire R ;
b) au moins un (méth)acrylate de métal ; et
c) au moins une amine tertiaire A de formule (I) 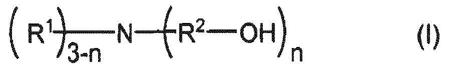
dans laquelle le radical R¹ représente un radical alkyle linéaire ou ramifié de 1 à 10 atomes C ;
les radicaux R² représentent indépendamment les uns des autres un radical alkylène linéaire ou ramifié de 1 à 10 atomes C, qui porte éventuellement un ou plusieurs hétéroatomes, et qui comprend éventuellement une ou plusieurs liaisons C-C multiples ; et
l'indice n représente une valeur de 0, 1, 2 ou 3.

2. Composition selon la revendication 1, **caractérisée en ce que** le radical R¹ représente un radical alkyle linéaire ou ramifié de 1 à 4 atomes C.

3. Composition selon l'une quelconque des revendications précédentes, **caractérisée en ce que** le radical R² représente un radical alkylène linéaire ou ramifié de 1 à 4 atomes C.

4. Composition selon l'une quelconque des revendications précédentes, **caractérisée en ce que** l'indice n représente une valeur de 2 ou 3.

5. Composition selon l'une quelconque des revendications précédentes, **caractérisée en ce que** le (méth)acrylate de métal est le di(méth)acrylate de zinc.

6. Composition selon l'une quelconque des revendications précédentes, **caractérisée en ce que** le (méth)acrylate de métal comprend un mélange de diméthacrylate de zinc et de diacrylate de zinc.

7. Composition selon l'une quelconque des revendications précédentes, **caractérisée en ce que** la composition contient en outre au moins un agent de formation de radicaux.

8. Composition selon l'une quelconque des revendications précédentes, **caractérisée en ce que** la composition comprend en outre au moins un oxyde métallique d'un métal bi- ou trivalent.

9. Composition selon l'une quelconque des revendications précédentes, **caractérisée en ce que** le monomère polymérisable par voie radicalaire R est un méthacrylate.

10. Composition selon l'une quelconque des revendications précédentes, **caractérisée en ce que** la proportion de (méth)acrylate de métal est de 0,1 à 20 % en poids par rapport à l'ensemble de la composition.

11. Composition selon l'une quelconque des revendications précédentes, **caractérisée en ce que** la proportion d'amine tertiaire A de formule (I) est de 0,01 à 7 % en poids par rapport à l'ensemble de la composition.

12. Composition selon l'une quelconque des revendications précédentes, **caractérisée en ce que** la composition contient en outre au moins une amine aromatique tertiaire ou un sel de métal de transition ou un complexe de métal de transition en tant que catalyseur pour la formation de radicaux.

13. Composition selon la revendication 7, **caractérisée en ce que** la composition est bicomposante,
le premier composant K1 comprenant le monomère polymérisable par voie radicalaire R ; et
le second composant K2 comprenant l'agent de formation de radicaux.

14. Utilisation d'une composition selon l'une quelconque des revendications 1 à 13 en tant qu'adhésif, agent d'étanchéité ou en tant que revêtement.

15. Utilisation d'une amine tertiaire A de formule (I), telle que décrite dans une composition selon la revendication 1, pour augmenter la stabilité au stockage de compositions comprenant au moins un monomère polymérisable par voie radicalaire R, ainsi qu'un (méth)acrylate de métal, notamment le di(méth)acrylate de zinc.
